# EUROPEAN PATENT SPECIFICATION

(11) **EP 1 647 109 B1**
(45) Date of publication and mention of the grant of the patent: **08.10.2008**
(21) Application number: 04737201.6
(22) Date of filing: 28.06.2004
(51) Int. Cl.: H04L 12/28

(54) **SYSTEM AND METHOD FOR GIVING A PRESENTATION**
SYSTEM UND VERFAHREN ZUR DURCHFÜHRUNG EINER PRÄSENTATION
SYSTEME ET PROCEDE PERMETTANT DE FAIRE UNE PRESENTATION

(30) Priority: 08.07.2003 EP 03102037
(43) Date of publication of application: 19.04.2006
(73) Proprietor: Philips Intellectual Property & Standards GmbH, 20099 Hamburg (DE); Koninklijke Philips Electronics N.V., 5621 BA Eindhoven (NL)
(72) Inventor: FALCK, Thomas, Philips Intel.Prop.&Standards GmbH, 52066 Aachen (DE); MAASS, Henning, Philips Intel.Prop.&Standards GmbH, 52066 Aachen (DE)
(74) Representative: Volmer, Georg
(86) International application number: PCT/IB2004/051020
(87) International publication number: WO 2005/004405

(56) References cited:
- US-A1- 2002 174 254
- US-A1- 2003 054 818
- LINKSYS: "WPG11 User Guide" INSTANT WIRELESS SERIES, [Online] 2002, pages 1-27, XP002294853 Retrieved from the Internet: URL:http://www.linksys.com/products/produc t.asp?grid=33&scid=38&prid=412> [retrieved on 2004-09-03]

## Description

The invention relates to a system and method for giving a presentation on an image-showing device from a mobile device.

For talks, product demonstrations and the like, increasing use is being made of presentations in which successive images are generated and shown by means of a computer.

In this connection, it is known from US20030017846 A1 for data for a presentation to be transmitted wirelessly from various mobile devices to a suitably set-up computer which is able to show the data to quite a large audience.

Moreover, US 2003/0054818 A1 shows a dual-mode device which is capable to expose two virtual wireless network adapters. The dual-mode device can be a part of two different wireless networks by switching from one wireless network to another. The switching is performed by a wireless controller driver. If the dual-mode device is not available in one wireless network, associated data packets will be queued.

The user guide of the Wireless Presentation Gateway WPG11 from LINKSYS explains the functions of the Wireless Presentation Gateway. It facilitates a wireless connection between a computer device and a projector. A user has to decide whether to establish an ad-hoc network or an infrastructure network when using the Wireless Presentation Gateway.

However, it has been found that what often occur in practice are situations of two different types which have to be dealt with in different ways as far as the coupling of the devices involved is concerned. In this way, it is desirable when a presentation is being given to a closed group of participants, such as within a company for example, for the mobile device operating the projector also to have access to resources and data available on an internal computer network (belonging to the company), in order for example to be able to call up images for the presentation from them. If on the other hand a visitor from outside should wish to give a presentation on the projector, for reasons relating to data protection he should not be allowed access to the internal network.

Against this background, it is an object of the present invention to provide a system for giving a presentation in which both internal users and users from outside are able to make optimum use of an image showing device having a wireless communications interface to communicate over an infrastructure network and an ad-hoc network.

This object is achieved by a system having the features stated in claim 1 and by a method having the features stated in claim 7. Advantageous embodiments are detailed in the dependent claims.

The system according to the invention is used for giving a presentation, with "presentation" being understood both here and in what follows to mean a series of successive images. In order to understand the invention it is referred to a system having the following features:
a) It includes an image-showing device having an interface via which wireless communication can be performed and which will be referred to below as a "wireless communications interface". The image-showing device may in particular be a projector by which the content of images available in digitized form can be projected optically onto a projection surface. The control of the image-showing device and the transmission of the presentation to be given preferably take place wirelessly via the said interface.
b) The system comprises (at least) one mobile device having a "wireless communications interface" that is intended to be compatible with, in particular, the wireless communications interface of the image-showing device. The mobile device may be a minicomputer such as, for example, a laptop, a PDA (personal digital assistant) or a suitably set-up mobile telephone.
   The image-showing device and the mobile device are further arranged to have the following features:
c) In response to a triggering event, an ad-hoc wireless connection is made between the mobile device and the image-showing device, with the triggering event preferably taking place at the mobile device, which thus initiates the making of the said connection. What is meant by an ad-hoc connection in this case is, as is usual, a communication connection that takes place directly between two participating devices and which does not require or embrace any other components or participants.
d) Once the above-mentioned ad-hoc connection has been made, the further communication is conveyed between the mobile terminal device and the image-showing device over a network, if there is one and if it is accessible to both devices (i.e. the mobile device and the image-showing device). If these conditions are not met, communication between the two devices continues by being performed over the ad-hoc connection.
e) A presentation controlled by the mobile device is shown by the image-showing device. Depending on the outcome of step d) detailed above, the control and transmission of data for the presentation take place either over an ad-hoc connection or over a network that is accessible to both devices.

The system that has been explained has the advantage that it sets the communication between a mobile device and an image-showing device to the optimum form to suit the situation. Where a talk is being given to a closed group of users, such as in-house within a company for example, communication takes place over an internal network that the company has, thus enabling the resources of the network to be used. If on the other hand one of the devices, such as in particular the mobile device, does not have access to such a network, then communication takes place over an ad-hoc connection. The latter makes good sense particularly for the giving of a presentation by a visitor to a company, because the visitor cannot generally be allowed to access the company's internal network.

The triggering event that, under feature c), initiates the making of an ad-hoc wireless connection may in particular be the coupling of the mobile device to a data carrier, which preferably contains the communications parameters required for the ad-hoc connection. The data carrier may, for example, be an insertable card for a standard card slot of mobile devices such as, for example, laptops. As well as communications parameters, the data carrier may also contain software that is required for controlling the image-showing device and handling the presentation. The use of a data carrier of this kind is advantageous particularly if a visitor's mobile device is to be coupled to an existing image-showing device, i.e. where the communications parameters required are not generally known in advance on the mobile device.

In a variant of the embodiment described above, the connection between the image-showing device and the mobile device is brought to an end if the coupling between the mobile device and the data carrier is terminated. If, for example, an appropriate insertable card is removed from a visitor's mobile device, this generally ends his entitlement to use the image-showing device, and the relevant connection therefore has to be disconnected.

In another variant of the system, the image-showing device is arranged to offer the mobile device controlled access to the resources of a network to which the image-showing device has access. In this way, images from a presentation that is transmitted from a visitor's mobile device to the image-showing device may be printed out on the printer connected to a company's internal network, without it being necessary for this purpose for the mobile device to be fully tied in to the company's internal network.

The invention also relates to a method of giving a presentation that comprises the following steps:
a) making of an ad-hoc wireless connection between a mobile device and an image-showing device;
b) checking whether a common network is accessible to the mobile device and the image-showing device; and is accessible changing the communication over to a connection over the network.
c) control of a presentation on the image-showing device by the mobile device.

In general terms, the method implements the steps that can be performed with a system of the kind described above. For a more detailed explanation of the method, reference should therefore be made to the above description and to the description of the Figures.

In a preferred embodiment of the method, what is established when the check is made to see whether a common network is accessible to the mobile device and the image-showing device, is whether the mobile device already has a connection to a common network. The latter is, for example, the case with mobile devices that are connected into a company's internal network to which the image-showing device is also connected.

If it is not being used for a presentation at the time, the image-showing device preferably goes to a mode in which it is ready to make an ad-hoc connection. In this way, it is ensured that the image-showing device can respond at any time to the search enquiry from a mobile device for an ad-hoc connection to be made.

In another embodiment of the method, information is transmitted from the mobile terminal device to the image-showing device over an ad-hoc connection and is then conveyed by the image-showing device to a network for further processing. The further processing may in particular comprise the printing out of the said information in this case. In this way, it is possible for a user to be allowed strictly limited access to certain resources on a company's internal network.

These and other aspects of the invention are apparent from and will be elucidated with reference to the embodiments described hereinafter.

In the drawings:
Figs. 1 to 6 show various states in the giving of a presentation by a projector from the laptop of a visitor to a company.
Figs. 7 to 14 show various states in the giving of a presentation by a projector over a company's internal network.
Figs. 15 and 16 show the printing-out of images on a company's internal
printer from the laptop of a visitor to the company.

The various Figures are schematic views of a system according to the presents invention in which the same reference numerals are used for the same components in all the Figures. The system comprises in particular a projector 1 for showing digital images on a projection surface, the projector having a wireless interface 2. The system also comprises a mobile device such as, for example, a laptop 3, which likewise has a wireless communications interface 4. Also shown in the Figures is a company's internal network 6, whose components 8, 9 can likewise be addressed wirelessly by authorized devices via one or more base stations 7.

The wireless communications interfaces 2, 4 may, for example, take the form of network cards to IEEE standard 802.11 that are so configured that they can operate either in an infrastructure mode or in an ad-hoc mode. In the infrastructure mode, a wireless terminal device communicates with other terminal devices via a base station, i.e. the mobile device 3 for example communicates with computers 8 on the network 6 via the base station 7. In the ad-hoc mode (also called the non-infrastructure-dependent mode) on the other hand, wireless terminal devices are able to communicate with one another directly, i.e. without the help of base stations. For a device to be able to be a member of an infrastructure-based or an ad-hoc network, it has to be operated in the appropriate mode and has to know the network name (SSID) and the encryption information (WEP key) for the network. If the device wishes to communicate with other devices by using the IP protocol, its IP stack also has to be configured with a suitable IP address and subnet mask.

The projector I enables a user to give presentations wirelessly by using his laptop 3. For this purpose, the projector 1 has control software and a program such as, for example, "PowerPoint Viewer"^{®} for showing presentation data (PowerPoint^{®} files). Also present on the laptop 3 are control software and a program with which the user can select the presentation to be shown and can control the progress of the presentation.

Advantageously, the wireless projector 1 should be able to be used both by employees of a company and by visitors to it. The laptops of employees are typically configured in this case in such a way that they are wirelessly connected to the company network 6 via a base station infrastructure. A visitor on the other hand does not have a suitably configured laptop and therefore cannot (and should not) access the network 6 of the company of which he is a guest. These two different situations then produce divergent requirements with respect to the configuring of the wireless projector 1:
- For an employee of the company it is desirable that both his laptop 3 and the projector 1 be members of the wireless, infrastructure-based company network 6. With his laptop 3, the employee can then access all the presentations that are stored on computers 8 able to be reached over the company network 6 and can control the projector 1 at the same time.
- However, to allow a visitor too to use the projector, the latter has to be capable of being reached not simply via the company network 6, which is not accessible to outsiders.

Also, both a visitor and an employee are faced with the problem of having to know the name (i.e. the IP address) of the projector 1, which may be a particular problem in fairly big companies that have a large number of projectors.

To enable the requirements described to be met in the most satisfactory way possible, the arrangement which is described below is proposed for the system and for a method of presentation. In it, the projector 1 is to be capable of being operated, as desired, in two different configurations or modes, namely an ad-hoc mode and an infrastructure mode. A mode lays down the parameters in this case, and these are given by way of example in Table 1 below for the ad-hoc mode:

| | | |
|---|---|---|
| Wireless parameters | Mode in which radio card operates | Ad-hoc |
| | Network name (SSID) | Projector_G111 |
| | Encryption parameter (WEP key) | 11 22 33 44 55 (optional) |
| IP parameters | IP address | 192.168.1.1 |
| | Subnet mask | 255.255.0.0 |

On being switched on, the projector 1 is in the ad-hoc mode. What the projector 1 uses as a network name (SSID) in this case is an identifier which is unambiguous throughout the company. What is achieved in this way is that there is no other wireless network (either ad-hoc or infrastructure-based) that has the same name. As an option, encryption on the wireless network can be activated with an associated WEP key. As an IPv4 address, all the projectors are assigned a private address (e.g. 192.168.1.1) plus the associated subnet mask (255.255.0.0). In the case of IPv6, what is used is the link local address formed from the unique MAC address of the wireless adapter. The projector 1 is at first the sole member of the radio network that it has created.

What is also associated with each projector 1 is an insertable card 5 on which are stored the software required for showing presentations and the configuring data for the ad-hoc mode (see Table 1) that is required for connecting to the projector 1. The insertable card 5 has a standard interface of the kind which is typically present on laptops, such as an interface conforming to the USB or PC-card standard. Rather than an insertable card, use could also be made of a CD-ROM containing the appropriate material, which the user has to insert in the CD-ROM drive of his laptop. Other types of mobile data carrier are of course equally suitable for this purpose. Rather than the insertable card 5 operating purely as a data carrier, what could also be used would be a radio card (WLAN card) that also performed a storage function and via which the laptop 3 could communicate wirelessly with the projector 1.

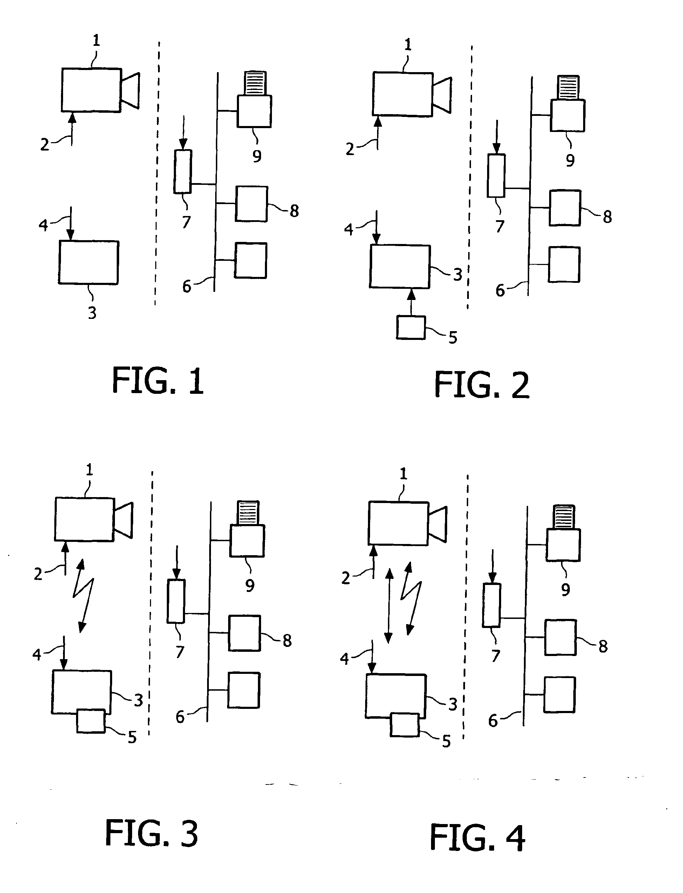

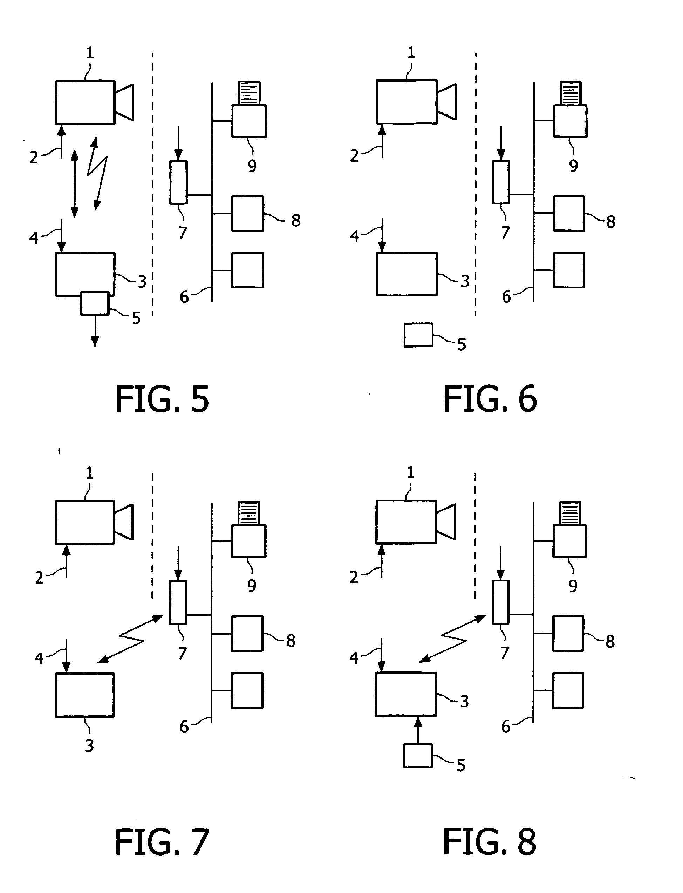

As soon as a user inserts the insertable card 5 or a comparable data carrier in his laptop 3 (Figs. 2 and 8), the control software stored on the card is automatically loaded into the working memory of the laptop 3 and then started. When this happens, the control software first establishes the current configuration of the radio card 4 and particularly the mode, network name (SSID), IP address and subnet mask, and stores these parameters. The values of these parameters could, for example, be those shown in Table 2:

| | | |
|---|---|---|
| Wireless parameters | Mode in which radio card is operating | Infrastructure |
| | Network name (SSID) | Philips-Aachen |
| | Encryption parameter (WEP key) | 33 44 55 12 34 |
| IP parameters | IP address | 130.143.113.120 |
| | Subnet mask | 255.255.225.0 |

The steps explained above are shown in Figs. 1 and 2 for the laptop 3 of a visitor and in Figs. 7 and 8 for the laptop 3 of a company employee. Where in particular the situations differ in this case is that the laptop 3 of a company employee (Figs. 7 and 8) has a wireless connection to the company network 6 via the latter's base station 7. The last-named state, namely operation in the infrastructure mode and connection to a base station 7, is checked in a first step after an insertable card 5 is inserted in the laptop 3. If the connection to the network 6 exists, what is involved is certainly the laptop 3 of an employee. Otherwise, it is assumed that it is the laptop 3 of a visitor.

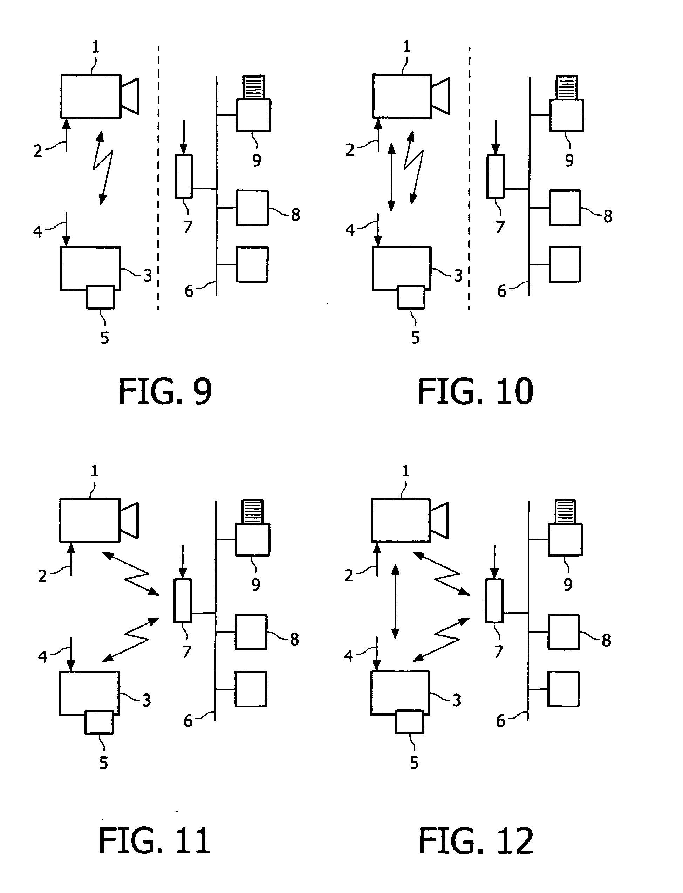

In both cases, the control software re-configures the radio card 4 in line with the configuring data stored on the insertable card 5 (Table 1) and sets the radio card 4 to the ad-hoc mode. A private address (e.g. 192.168.1.2) is selected as the IP address and the subnet mask used is 255.255.0.0. The only condition governing the private address selected is that it must be different than the address of the projector 1 that is stored on the insertable card 5. In the case of IPv6, what is used is the link local address formed from the unique MAC address of the wireless adapter. The laptop 3 and the projector 1 then form an ad-hoc network (Figs. 3 and 9 in the respective cases) and are able to communicate with one another over it.

The continuation of the process will first be explained for the case where the laptop 3 belongs to a visitor (Figs. 1 to 6). If the control software has established that this condition applies, in the manner explained above, the software for reproducing presentations that is stored on the insertable card 5 is started. The visitor can select presentations stored on his laptop 3 in this case, and these are then transmitted to the projector 1 over the ad-hoc connection and are shown by it. The visitor can control the progress of the presentation with, for example, the "Forward" and "Back" keys (Fig. 4). If the insertable card 5 is withdrawn from the laptop 3 (Fig. 5), or if the presentation program is brought to an end by the visitor, the control software informs the projector 1 of this and restores the radio card 4 to its original configuration, which is in store. The laptop 3 is thus in its original state again. As soon as the projector 1 is notified that the user has removed the insertable card 5 from the laptop 3, it stops reproducing the presentation and remains in the ad-hoc mode (Figs. 5 & 6).

If the user has brought the presentation program to an end but has not yet removed the insertable card 5, he is instructed to remove the insertable card 5 both on the display of the laptop 3 and via what is projected.

Finally, both the laptop and the projector 1 are back in their respective original states (Fig. 6 matches Fig. 1).

When the laptop 3 is a device belonging to an employee of the company, the method proceeds as shown in Figs. 7 to 14. Over the ad-hoc network that is established in the manner explained, the control software first instructs the projector 1 to become a member of the company network 6 (Fig. 10). To allow this instruction to be complied with, the control software of the projector 1 sets the radio card 2 of the projector 1 to an infrastructure mode and configures the network parameters accordingly. The parameters such as network name, WEP key, IP address and the like that are needed for the purpose have, for example, been entered beforehand and stored on the projector 1 by an administrator. The configuration of the projector for the infrastructure mode could be, as shown in Table 3:

| | | |
|---|---|---|
| Wireless parameters | Mode in which radio card operates | Infrastructure |
| | Network name (SSID) | Philips-Aachen |
| | Encryption parameter (WEP key) | 33 44 55 12 34 |
| IP parameters | IP address | 130.143.113.25 |
| | Subnet mask | 255.255.225.0 |

The control software of the laptop 3 then restores the radio card 4 of the laptop to its original configuration (Table 2) so that the laptop 3 again becomes a member of the company network 6. As shown in Fig. 11, the laptop 3 and the projector 1 are then connected to the company network 6 via the base station 7 (or via different base stations), and are thus able to communicate over the company network 6.

As shown in Fig. 12, the control software on the laptop 3 then starts the software stored on the insertable card 5 for reproducing presentations. The user may select presentations stored on his laptop 3 in this case, or ones stored on a different computer 8 that can be reached over the company network 6, and may cause them to be transmitted to the projector 1 and shown there.

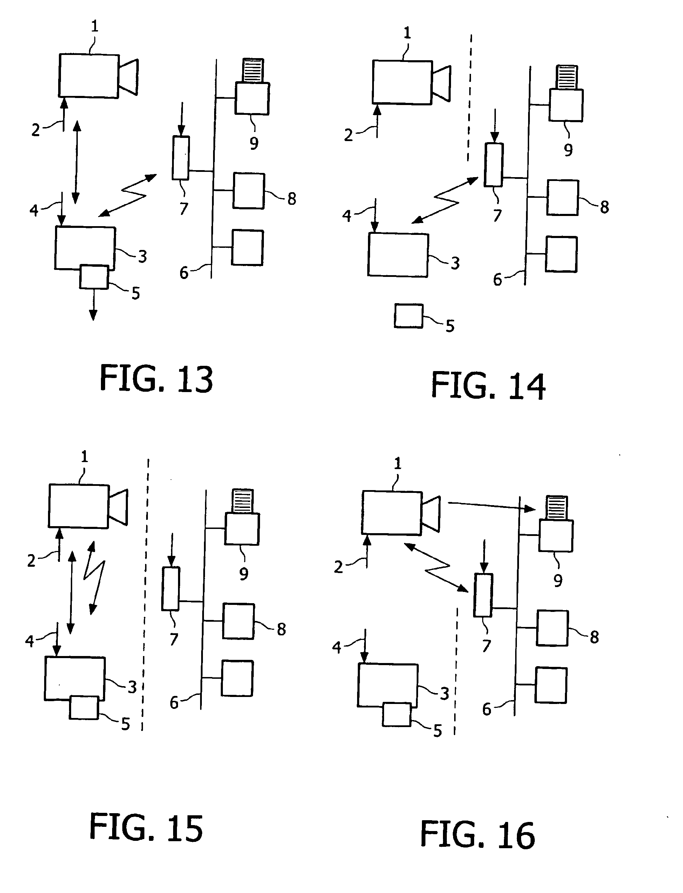

If the insertable card 5 is withdrawn from the laptop 3 or the presentation program is brought to an end by the user, the control software of the laptop 3 informs the projector 1 of this. The laptop 3 remains in the infrastructure mode and thus remains a member of the company network 6. As soon as the projector 1 is notified that the user has removed the insertable card 5 from the laptop 3, it stops the reproduction of the presentation and re-configures the radio card 2 for the ad-hoc mode (Table 1) (Figs. 13 and 14).

If the user brings the presentation program to an end but has not yet removed the insertable card 5, he is instructed to remove the insertable card 5 both on the display of the laptop 3 and via what is projected.

At the end of the method, both the laptop 3 and the projector 1 are back in their original states (Fig. 14 matches Fig. 7).

As a further function, the projector 1 may offer visitors the possibility of printing out presentations on a printer 9 that is accessible over the company network. The procedure required for this purpose is shown schematically in Figs. 15 and 16.

The laptop 3 first instructs the projector 1 to print the presentation that is being shown at the time. The presentation is transmitted from the laptop 3 to the projector 1 (if this has not already been done) (Fig. 15).

The projector 1 then goes to the infrastructure mode and sets the configuration required for it (Table 3). The projector is thereby connected to the company network 6 and is able to send the presentation to the nearest printer 9 (Fig. 16). Which printer is to be used has to be laid down once only at the administrative level when the projector 1 is being set up.

The projector then returns to the ad-hoc mode, as a result of which the laptop 3 and projector 1 are connected to one another again (see Fig. 15).

The system explained above thus offers the following advantages:
- A wireless projector 1 can be used both by visitors and by employees.
- The wireless projector could have two network adapters, one in the ad-hoc mode and one in the infrastructure mode, but it requires only a single wireless adapter.
- Employees can show any presentations that are accessible over the company network 6.
- Visitors do not need, and are not given, any access to the company network 6.
- Visitors can also print their presentations via the projector 1.

All the configuring data and programs required are situated on an insertable card 5. To use the projector 1, the user simply has to insert this insertable card 5 in his laptop 3. There is no need for any manual configuring or installation by the user.

### LIST OF REFERENCE NUMERALS:

- 1: Projector
- 2: Wireless communications interface
- 3: Mobile device
- 4: Wireless communications interface
- 5: Insertable card
- 6: Company's internal network
- 7: Access point
- 8: PC
- 9: Printer

## Claims

1. A system for giving a presentation, comprising:
a) an image-showing device (1) having a wireless communications interface (2),
b) a mobile device (3) having a wireless communications interface (4), wherein the presentation on the image-showing device (1) is controlled by the mobile device (3),
**characterized in that,**
c) the image-showing device (1) and the mobile device (3) are arranged to make an ad-hoc wireless connection in response to a triggering event and
d) if a common network (6) is accessible to the image-showing device (1) and to the mobile device (3) to convey a communication necessary to show a presentation over the network (6).

2. A system as claimed in claim 1, **characterized in that** the image-showing device is a projector (1).

3. A system as claimed in claim 1 or 2, **characterized in that** the triggering event is the coupling of the mobile device (3) to a data carrier (5), which latter preferably contains the communications parameters required for the ad-hoc connection.

4. A system as claimed in claim 3, **characterized in that** the connection between the image-showing device (1) and the mobile device (3) is brought to an end when the coupling of the mobile device (3) to the data carrier (5) is interrupted.

5. A system as claimed in claim 3 or 4, **characterized in that** the data carrier is an insertable card (5) or a CD-ROM.

6. A system as claimed in any of claims 1 to 5, **characterized in that** the image- showing device (1) offers the mobile device (3) controlled access to resources on a network (6) accessible to the image-showing device, and in particular to printers (9) connected into the network.

7. A method of giving a presentation, comprising the following steps:
a) making of an ad-hoc wireless connection between a mobile device (3) and an image-showing device (1),
b) checking whether a common network (6) is accessible to the mobile device (3) and the image-showing device (1), and if accessible changing the communication over to a connection over the network,
c) control of a presentation on the image-showing device (1) by the mobile device (3).

8. A method as claimed in claim 7, **characterized in that**, in the check, it is established whether the mobile device (3) already has a connection to a common network (6)

9. A method as claimed in claim 7 or 8, **characterized in that**, if it is not being used for a presentation, the image-showing device (1) goes to a mode in which it is ready to make an ad-hoc connection.

10. A method as claimed in any of claims 7 to 9, **characterized in that** information is transmitted from the mobile device (3) over an ad-hoc connection to the image-showing device (1) and is conveyed by the latter to a network (6) for further processing, and in particular for printing out.

## Patentansprüche

1. System zum Geben einer Präsentation, das Folgendes umfasst:
a) ein Bild-Darstellungsgerät (1) mit einer drahtlosen Kommunikationsschnittstelle (2);
b) ein mobiles Gerät (3) mit einer drahtlosen Kommunikationsschnittstelle (4), wobei die Präsentation auf dem Bild-Darstellungsgerät (1) von dem mobilen Gerät (3) gesteuert wird,
**dadurch gekennzeichnet, dass**
c) das Bild-Darstellungsgerät (1) und das mobile Gerät (3) dazu eingerichtet sind, auf ein auslösendes Ereignis hin eine drahtlose Ad-hoc-Verbindung aufzubauen, und,
d) falls dem Bild-Darstellungsgerät (1) und dem mobilen Gerät (3) ein gemeinsames Netzwerk (6) zugänglich ist, eine zur Darstellung einer Präsentation notwendige Kommunikation über das Netzwerk (6) zu leiten.

2. System nach Anspruch 1, **dadurch gekennzeichnet, dass** das Bild-Darstellungsgerät ein Projektor (1) ist.

3. System nach Anspruch 1 oder 2, **dadurch gekennzeichnet, dass** das auslösende Ereignis die Kopplung des mobilen Gerätes (3) mit einem Datenträger (5) ist, wobei letzterer vorzugsweise die für die Ad-hoc-Verbindung benötigten Kommunikationsparameter enthält.

4. System nach Anspruch 3, **dadurch gekennzeichnet, dass** die Verbindung zwischen dem Bild-Darstellungsgerät (1) und dem mobilen Gerät (3) beendet wird, wenn die Kopplung des mobilen Gerätes (3) zum Datenträger (5) unterbrochen wird.

5. System nach Anspruch 3 oder 4, **dadurch gekennzeichnet, dass** der Datenträger eine Steckkarte (5) oder eine CD-ROM ist.

6. System nach mindestens einem der Ansprüche 1 bis 5, **dadurch gekennzeichnet, dass** das Bild-Darstellungsgerät (1) dem mobilen Gerät (3) kontrollierten Zugriff auf Ressourcen eines dem Bild-Darstellungsgerät zugänglichen Netzwerkes (6) bietet, insbesondere auf in das Netzwerk eingebundene Drucker (9).

7. Verfahren zum Geben einer Präsentation, das die folgenden Schritte umfasst:
a) Aufbau einer drahtlosen Ad-hoc-Verbindung zwischen einem mobilen Gerät (3) und einem Bild-Darstellungsgerät (1);
b) Überprüfung, ob dem mobilen Gerät (3) und dem Bild-Darstellungsgerät (1) ein gemeinsames Netzwerk (6) zugänglich ist, und, falls das der Fall ist, Umstellung der Kommunikation auf eine Verbindung über das Netzwerk;
c) Steuerung einer Präsentation auf dem Bild-Darstellungsgerät (1) durch das mobile Gerät (3).

8. Verfahren nach Anspruch 7, **dadurch gekennzeichnet, dass** bei der Überprüfung festgestellt wird, ob das mobile Gerät (3) bereits eine Verbindung zu einem gemeinsamen Netzwerk (6) hat.

9. Verfahren nach Anspruch 7 oder 8, **dadurch gekennzeichnet, dass** das Bild-Darstellungsgerät (1) in einen Modus der Bereitschaft zum Aufbau einer Ad-hoc-Verbindung übergeht, falls es nicht für eine Präsentation verwendet wird.

10. Verfahren nach mindestens einem der Ansprüche 7 bis 9, **dadurch gekennzeichnet, dass** Informationen vom mobilen Gerät (3) über eine Ad-hoc-Verbindung an das Bild-Darstellungsgerät (1) übermittelt und von diesem an ein Netzwerk (6) zur Weiterverarbeitung geleitet werden, insbesondere zum Ausdrucken.

## Revendications

1. Système pour donner une présentation, comprenant:
a) un dispositif de représentation d'image (1) ayant une interface de communications sans fil (2),
b) un dispositif mobile (3) ayant une interface de communications sans fil (4) dans laquelle la présentation sur le dispositif de représentation d'image (1) est commandée par le dispositif mobile (3),
**caractérisé en ce que**:
c) le dispositif de représentation d'image (1) et le dispositif mobile (3) sont agencés de manière à réaliser une connexion sans fil ad hoc en réponse à un événement de déclenchement, et
d) si un réseau commun (6) est accessible au dispositif de représentation d'image (1) et au dispositif mobile (3) pour transmettre une communication qui est nécessaire à montrer une présentation par le biais du réseau (6).

2. Système selon la revendication 1, **caractérisé en ce que** le dispositif de représentation d'image est un projecteur.

3. Système selon la revendication 1 ou 2, **caractérisé en ce que** l'événement de déclenchement est le couplage du dispositif mobile (3) à un support de données (5), lequel dernier contient de préférence les paramètres de communication qui sont requis pour la connexion ad hoc.

4. Système selon la revendication 3, **caractérisé en ce que** la connexion entre le dispositif de représentation d'image (1) et le dispositif mobile (3) est achevée lorsque le couplage du dispositif mobile (3) au support de données (5) est interrompu.

5. Système selon la revendication 3 ou 4, **caractérisé en ce que** le support de données est une carte insérable (5) ou un disque compact à mémoire morte.

6. Système selon l'une quelconque des revendications précédentes 1 à 5, **caractérisé en ce que** le dispositif de représentation d'image (1) offre au dispositif mobile (3) l'accès commandé aux ressources sur un réseau (6) qui est accessible au dispositif de représentation d'image et, en particulier, à des imprimantes (9) qui sont connectées dans un réseau.

7. Procédé pour donner une présentation, comprenant les étapes suivantes consistant à:
a) réaliser une connexion sans fil ad hoc entre un dispositif mobile (3) et un dispositif de représentation d'image (1),
b) vérifier si un réseau commun (6) est accessible au dispositif mobile (3) et au dispositif de représentation d'image et, s'il est accessible, à passer la communication par le biais d'une connexion au réseau,
c) commander une présentation sur le dispositif de représentation d'image (1) par le dispositif mobile (3).

8. Procédé selon la revendication 7, **caractérisé en ce que**, dans le contrôle, il est établi que le dispositif mobile (3) présente déjà une connexion à un réseau commun (6).

9. Procédé selon la revendication 7 ou 8, **caractérisé en ce que** le dispositif de représentation d'image (1), s'il n'est pas en cours d'être utilisé pour une présentation, s'achemine vers un mode dans lequel il est prêt à réaliser une connexion ad hoc.

10. Procédé selon l'une quelconque des revendications précédentes 7 à 9, **caractérisé en ce que** de l'information est transmise à partir du dispositif mobile (3), par le biais d'une connexion ad hoc, au dispositif de représentation d'image (1) et est acheminée par ce dernier vers un réseau (6) pour un nouveau autre traitement et, en particulier, pour une impression.
